(19) Europäisches Patentamt / European Patent Office / Office européen des brevets

(11) EP 2 671 993 B1

(12) **EUROPEAN PATENT SPECIFICATION**

(45) Date of publication and mention of the grant of the patent:
**31.10.2018 Bulletin 2018/44**

(21) Application number: **12742149.3**

(22) Date of filing: **31.01.2012**

(51) Int Cl.:
***D04H 3/007*** *(2012.01)* ***C08F 10/06*** *(2006.01)*
***D04H 1/4291*** *(2012.01)*

(86) International application number:
**PCT/JP2012/052160**

(87) International publication number:
**WO 2012/105566 (09.08.2012 Gazette 2012/32)**

(54) **NONWOVEN FABRIC AND TEXTILE PRODUCT**

VLIESSTOFF UND TEXTILPRODUKT

NON-TISSÉ ET PRODUIT TEXTILE

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **01.02.2011 JP 2011020151**

(43) Date of publication of application:
**11.12.2013 Bulletin 2013/50**

(73) Proprietor: **Idemitsu Kosan Co., Ltd.**
**Chiyoda-ku**
**Tokyo 100-8321 (JP)**

(72) Inventors:
- **KOORI, Yohei**
  **Ichihara-shi**
  **Chiba 299-0193 (JP)**
- **TAKEBE, Tomoaki**
  **Ichihara-shi**
  **Chiba 299-0193 (JP)**
- **MINAMI, Yutaka**
  **Ichihara-shi**
  **Chiba 299-0193 (JP)**

(74) Representative: **Vossius & Partner**
**Patentanwälte Rechtsanwälte mbB**
**Siebertstrasse 3**
**81675 München (DE)**

(56) References cited:
**EP-A1- 1 260 525**
**EP-A1- 2 479 331**
**WO-A1-2009/001871**
**WO-A1-2010/018789**
**WO-A1-2011/030893**
**JP-A- 2000 344 833**
**JP-A- 2001 191 463**
**JP-A- 2001 191 463**
**JP-A- 2003 027 331**
**JP-A- 2003 027 331**
**US-A1- 2010 190 405**

Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).

EP 2 671 993 B1

## Description

TECHNICAL FIELD

The present invention relates to a nonwoven fabric with excellent low temperature heat-sealing properties and a textile product formed by using the nonwoven fabric.

BACKGROUND ART

In recent years, polypropylene fibers and nonwoven fabrics are subjected to various applications including a disposable diaper, a sanitary product, other hygienic products, a clothing material, a bandage, and a packaging material. Such fibers and nonwoven fabrics are often used directly on the skin and are thus demanded to have suitable elasticity and elastic recovery properties from the viewpoint of good wear feeling to the body and of easy body motion after wearing. This has encouraged the various technological developments of the fibers and nonwoven fabrics. For example, Patent Literature 1 discloses an elastic nonwoven fabric with excellent elastic recovery properties and pleasant texture without stickiness and a textile product formed by using the elastic nonwoven fabric.

In addition to such technology developments, a hygienic product such as a paper diaper is disposable. Therefore, the production cost is desired to be lowered, by simplifying the production process. In particular, the secondary processability of the nonwoven fabric is desired to be improved. One of the indices of the secondary processability includes the heat-sealing properties and the laminatability between the nonwoven fabrics or between a nonwoven fabric and a film. To obtain the necessary heat-sealing strength at low cost, low temperature heat-sealing properties are required. EP2479331 A1 cited under Art. 54(3) EPC discloses a spunbond nonwoven fabric made of a specific crystalline resin composition.

US2010/0190405 A1 discloses an elastic nonwoven fabric made of a crystalline resin composition containing low crystalline polypropylene and high crystalline polypropylene.

EP1260525 A1 discloses a formed product made of 1-butene polymer.

JP2003-27331 A discloses a polyolefin fiber made of a specific propylene polymer.

JP2000-344833 A discloses a propylene polymer composition which can provide a formed article with less stickiness and excellent softness and transparency.

JP2001-191463 discloses a multilayered structure comprising a layer consisting of a specific propylene polymer.

CITATION LIST

PATENT LITERATURE

Patent Literature 1: JP-A-2009-62667

SUMMARY OF THE INVENTION

TECHNICAL PROBLEM

However, conventional high crystalline polypropylene nonwoven fabrics have a high heat-sealing temperature in order to obtain the required heat-sealing strength.

Thus, an objective of the present invention is to provide a nonwoven fabric with excellent secondary processability, particularly low temperature heat-sealing properties and a textile product formed by using the nonwoven fabric.

SOLUTION TO PROBLEM

As the result of their extensive studies on the above-mentioned problem, the inventors found that using a crystalline resin composition containing a certain amount of a low crystalline olefin polymer which has a certain range of melting point (Tm) and a certain range of melt endotherm (ΔH) and which satisfies a specific relationship between the melting point and the melt endotherm provides a nonwoven fabric with excellent low temperature heat-sealing properties and a textile product formed by using the nonwoven fabric. Accordingly, the inventors achieved the present invention.

Specifically, the present invention relates to
a nonwoven fabric according to claims 1 to 9, and a textile product according to claim 10.

ADVANTAGEOUS EFFECTS OF THE INVENTION

The nonwoven fabric of the present invention has particularly excellent low temperature heat-sealing properties (for example, heat-sealing strength at 160 to 180°C) so as to stably provide various inexpensive textile products with excellent secondary processability.

MODE FOR CARRYING OUT THE INVENTION

The nonwoven fabric of the present invention is produced by using a crystalline resin composition containing a certain amount of a low crystalline olefin polymer. In the present invention, the low crystalline olefin polymer has moderately disturbed stereoregularity, which specifically means an olefin polymer satisfying the following expression (a). On the other hand, an olefin polymer not satisfying the expression (a) is sometimes referred to as a high crystalline olefin polymer. For example, when the olefin polymer is a polypropylene, the high crystalline olefin polymer is a high crystalline polypropylene.

$$\text{(a) } \Delta H \geq 6 \times (Tm - 140°C)$$

In the expression, ΔH represents a melt endotherm, and Tm represents a melting point. The expression (a) shows that the melt endotherm is high for a melting point. An olefin polymer obtained by the below-mentioned process of producing a low crystalline olefin polymer satisfies the expression (a). However, an olefin polymer produced by using a conventional Ziegler-Natta catalyst with different catalytic sites does typically not satisfy the expression (a).

The crystalline resin composition used in the present invention is a composition containing a low crystalline olefin polymer, as described above.

The low crystalline olefin polymer satisfies the following conditions (b) and (c).

(b) The melting point (Tm) is 0°C or more and less than 120°C.
(c) The melt endotherm (ΔH) is from 1 to 100 J/g.

Low crystalline olefin polymer:

The low crystalline olefin polymer used in the present invention is preferably an olefin polymer generated by polymerizing one or more kinds of monomers selected from ethylene and α-olefins with 3 to 28 carbon atoms, particularly preferably an olefin polymer generated by polymerizing one or more kinds of monomers selected from α-olefins with 3 to 28 carbon atoms.

The α-olefins with 3 to 28 carbon atoms include, for example, propylene, 1-butene, 1-pentene, 4-methyl-1-pentene, 1-hexene, 1-octene, 1-decene, 1-undecene, 1-dodecene, 1-tridecene, 1-tetradecene, 1-pentadecene, 1-hexadecene, 1-heptadecene, 1-octadecene, 1-nonadecene, and 1-icosene. The α-olefin has preferably 3 to 16 carbon atoms, more preferably 3 to 10 carbon atoms, further more preferably 3 to 6 carbon atoms, which is particularly preferably propylene. The olefin polymer generated by polymerizing any one of these α-olefins alone or by copolymerizing any combination of two or more kinds may be used. In the present invention, the term "olefin polymer" connotes "olefin copolymer".

In the present application, the low crystalline olefin polymer is a low crystalline polypropylene. The polypropylene may be copolymerized with the above-mentioned α-olefin other than propylene as long as satisfying the expression (a). In this case, the use ratio of the above-mentioned α-olefin other than propylene is preferably 2% by mass or less, more preferably 1% by mass or less based on the total amount of propylene and the α-olefin other than propylene.

The low crystalline olefin polymers satisfying the above-mentioned expression (a) may be used alone or in combination with two or more kinds.

The low crystalline olefin polymer used in the present invention is an olefin polymer satisfying the above-mentioned expression (a). The olefin polymer also satisfies the above-mentioned condition (b). Specifically, the olefin polymer has a low melting point of 0°C or more and less than 120°C. When the melting point is 0°C or more, the olefin polymer is hardly sticky or liquid. When the melting point is less than 120°C, the olefin polymer easily improves the low temperature heat-sealing properties without the decreased adhesion temperature between nonwoven fabrics being prevented. From this viewpoint, the melting point is preferably 20°C or more and less than 120°C, more preferably from 20 to 100°C, more preferably from 40 to 100°C, further more preferably from 50 to 90°C, particularly preferably from 60 to 80°C.

The melting point is defined as the peak top of a melt endothermic curve obtained by maintaining the temperature of 10 mg of the sample at 230°C for 3 minutes and decreasing it to 0°C at 10°C/minute; and then maintaining it 0°C for 3 minutes and increasing it at 10°C/minute, under a nitrogen atmosphere, by using a differential scanning calorimeter (DSC-7 available from PerkinElmer, Inc.). The melt endotherm in this case is defined as ΔH.
The low crystalline olefin polymer used in the present invention satisfies the condition (c). Specifically, the melt endotherm (ΔH) is preferably from 1 to 100 J/g. When the melt endotherm is 1 J/g or more, the low crystalline olefin polymer is not completely amorphous or melted at room temperature. When the melt endotherm is 100 J/g or less, the nonwoven fabric has a low crystallinity so as to easily improve the low temperature heat-sealing properties. From this viewpoint, the melt endotherm is preferably from 2 to 90 J/g, more preferably from 2 to 60 J/g, more preferably from 5 to 50 J/g, further more preferably from 10 to 50 J/g, particularly preferably from 15 to 40 J/g.
The low crystalline olefin polymer used in the present invention is required to satisfy the following expression (a):

$$\text{(a) } \Delta H \geq 6 \times (Tm - 140°C),$$

preferably $\Delta H \geq 3 \times (Tm - 120°C)$,
more preferably $\Delta H \geq 2 \times (Tm - 100°C)$. In the expression, ΔH represents a melt endotherm, and Tm represents a melting point.
The low crystalline olefin polymer used in the present invention preferably has a crystallization temperature (Tc) of 10 to 60°C, more preferably 20 to 50°C, further more preferably 30 to 40°C. The melt flow rate (MFR) is preferably 20 to 400 g/10 minutes, more preferably 20 to 200 g/10 minutes, further more preferably 20 to 100 g/10 minutes, particularly preferably 40 to 80 g/10 minutes. The crystallization temperature and the MFR are values measured by the respective methods described in Examples.
The low crystalline olefin polymer used in the present invention particularly preferably satisfies the following expressions (d) to (i), which is more preferably a low crystalline polypropylene satisfying the following expressions (d) to (i):

$$\text{(d) [mmmm] = 20 to 60\% by mol}$$

$$\text{(e) [rrrr]/(1-[mmmm])} \leq 0.1$$

$$\text{(f) [rmrm]} > 2.5\% \text{ by mol}$$

$$\text{(g) [mm]} \times \text{[rr]/[mr]}^2 \leq 2.0$$

$$\text{(h) Weight-average molecular weight (Mw) = 10,000 to 200,000,}$$

and

$$\text{(i) Molecular weight distribution (Mw/Mn)} < 4,$$

wherein [mmmm] represents a mesopentad fraction, [rrrr] represents a racemic pentad fraction, [rmrm] represents a racemic-meso-racemic-meso pentad fraction, [mm] represents a mesotriad fraction, [rr] represents a racemic triad fraction, and [mr] represents a meso-racemic triad fraction. These values were determined by the method described in Examples.
The above-mentioned expressions (d) to (i) will be explained below in turn.

(d) [mmmm] = 20 to 60% by mol

The low crystalline polypropylene suitably used in the present invention has an [mmmm] (mesopentad fraction) of 20 to 60% by mol. When the [mmmm] is 20% by mol or more, the melt-solidification does not delay so as to avoid a sticky fiber. Accordingly, the nonwoven fabric is not attached to a winding roll but easily continuously formed. When the

[mmmm] is 60% by mol or less, the low temperature heat-sealing properties is excellent, the crystallinity is not too high, and the elastic recovery properties is also excellent. From this viewpoint, the [mmmm] is preferably 30 to 50% by mol, more preferably 40 to 50% by mol.

(e) [rrrr]/(1-[mmmm]) ≤ 0.1

The low crystalline polypropylene suitably used in the present invention has an [rrrr]/(1-[mmmm]) of preferably 0.1 or less. The [rrrr]/(1-[mmmm]) is an index representing the uniformity of the regularity distribution of the low crystalline polypropylene. If the value is too large, a mixture of a high stereoregular polypropylene and an atactic polypropylene is obtained like an ordinary polypropylene produced with an existing catalyst and causes a sticky fiber. From this viewpoint, [rrrr]/(1-[mmmm]) is preferably from 0.001 to 0.05, more preferably from 0.001 to 0.04, further more preferably from 0.01 to 0.04.

(f) [rmrm] > 2.5% by mol

The low crystalline polypropylene suitably used in the present invention has an [rmrm] of more than 2.5% by mol. When the [rmrm] is more than 2.5% by mol, the randomness of the low crystalline polypropylene can be maintained. This avoids the crystallinity to be increased due to crystallization caused by the isotactic polypropylene bock chain so as not to decrease the elastic recovery properties. From this viewpoint, the [rmrm] is preferably 2.6% by mol or more, more preferably 2.7% by mol or more. The upper limit is typically about 10% by mol, more preferably 7% by mol, further more preferably 5% by mol, particularly preferably 4% by mol.

(g) $[mm]\times[rr]/[mr]^2 \leq 2.0$

The low crystalline polypropylene suitably used in the present invention has an $[mm]\times[rr]/[mr]^2$ of preferably 2.0 or less. The $[mm]\times[rr]/[mr]^2$ is an index representing the randomness of a polymer. When this value is 2.0 or less, a fiber obtained by spinning has sufficient elastic recovery properties and is controlled not to be sticky. From this viewpoint, the $[mm]\times[rr]/[mr]^2$ is preferably more than 0.25 and 1.8 or less, more preferably from 0.5 to 1.8, further more preferably from 1 to 1.8, particularly preferably from 1.2 to 1.6.

(h) Weight-average molecular weight (Mw) = 10,000 to 200,000

The low crystalline polypropylene suitably used in the present invention has a weight-average molecular weight of 10,000 to 200,000. When the weight average molecular weight is 10,000 or more, the viscosity of the low crystalline polypropylene is not too low but is moderate so as to avoid a broken thread upon spinning. When the weight average molecular weight is 200,000 or less, the viscosity of the low crystalline polypropylene is not too high to increase the spinnability. From this viewpoint, the weight-average molecular weight is preferably from 30,000 to 200,000, more preferably from 40,000 to 150,000, further more preferably from 80,000 to 150,000, particularly preferably from 100,000 to 140,000.

(i) Molecular weight distribution (Mw/Mn) < 4

The low crystalline polypropylene suitably used in the present invention has a molecular weight distribution (Mw/Mn) of preferably less than 4. When the molecular weight distribution is less than 4, the fiber obtained by spinning is controlled not to be sticky. The molecular weight distribution is preferably 3 or less, more preferably 2.5 or less, further more preferably from 1.5 to 2.5.

Process of producing low crystalline olefin polymer:

As the process of producing a low crystalline olefin polymer used in the present invention, the α-olefin such as propylene is preferably polymerized or copolymerized by using a metallocene catalyst obtained by combining (A) a transition metal compound having a crosslinked structure through two crosslinking groups with (B) a promoter. According to this process, a low crystalline olefin polymer satisfying the above-mentioned expression (a) can be easily produced.

Specifically, the α-olefin such as propylene is polymerized or copolymerized in the presence of a polymerization catalyst containing a promoter component (B) selected from a transition metal compound (A) represented by the following general formula (I); a compound (B-1) capable of forming an ionic complex through reaction with a transition metal compound as the component (A) or a derivative thereof; and an aluminoxane (B-2).

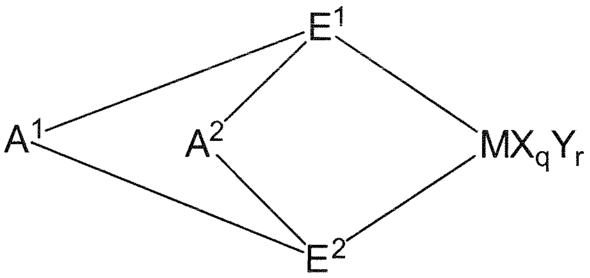

( I )

In the general formula (I), M represents a metal element of the groups 3 to 10 in the periodic table or of lanthanoid series; $E^1$ and $E^2$ each represent a ligand selected from a substituted cyclopentadienyl group, an indenyl group, a substituted indenyl group, a heterocyclopentadienyl group, a substituted heterocyclopentadienyl group, an amide group, a phosphide group, a hydrocarbon group, and a silicon-containing group, forming a crosslinked structure through $A^1$ and $A^2$, $E^1$ and $E^2$ may be the same or different from each other; X represents a σ-bonding ligand, wherein when exist, a plurality of "X"s may be the same or different from each other and may be crosslinked to another X, $E^1$, $E^2$, or Y. Y represents a Lewis base, wherein when exist, a plurality of "Y"s may be the same or different from each other and may be crosslinked to another Y, $E^1$, $E^2$, or X; $A^1$ and $A^2$ are each a divalent crosslinking group bonding two ligands and each represent a hydrocarbon group with 1 to 20 carbon atoms, a halogen-containing hydrocarbon group with 1 to 20 carbon atoms, a silicon-containing group, a germanium-containing group, a tin-containing group, -O-, -CO-, -S-, $-SO_2-$, -Se-, $-NR^1-$, $-PR^1-$, $-P(O)R^1-$, $-BR^1-$, or - $A1R^1$-, wherein $R^1$ represents a hydrogen atom, a halogen atom, a hydrocarbon group with 1 to 20 carbon atoms, or a halogen-containing hydrocarbon group with 1 to 20 carbon atoms, and $A^1$ and $A^2$ may be the same or different from each other. q represents an integer of 1 to 5, i.e., {(atomic valence of M) - 2}; and r represents an integer of 0 to 3.

The specific example of the transition metal compound represented by the general formula (I) includes (1,2'-dimethylsilylene)(2,1'-dimethylsilylene)-bis(3-n-butylindenyl)zirconium dichloride, (1,2'-dimethylsilylene)(2,1'-dimethylsilylene)-bis(3-trimethylsilylmethylindenyl)zirconium dichloride, (1,2'-dimethylsilylene)(2,1'-dimethylsilylene)-bis(3-phenylindenyl)zirconium dichloride,(1,2'-dimethylsilylene)(2,1'-dimethylsilylene)-bis(4,5-benzoindenyl)zirconium dichloride, (1,2'-dimethylsilylene)(2,1'-dimethylsilylene)-bis(4-isopropylindenyl)zirconium dichloride, (1,2'-dimethylsilylene)(2,1'-dimethylsilylene)-bis(5,6-dimethylindenyl)zirconium dichloride, (1,2'-dimethylsilylene)(2,1'-dimethylsilylene)-bis(4,7-di-isopropylindenyl)zirconium dichloride, (1,2'-dimethylsilylene)(2,1'-dimethylsilylene)-bis(4-phenylindenyl)zirconium dichloride, (1,2'-dimethylsilylene)(2,1'-dimethylsilylene)-bis(3-methyl-4-isopropylindenyl)zirconium dichloride, (1,2'-dimethylsilylene)(2,1'-dimethylsilylene)-bis(5,6-benzoindenyl)zirconium dichloride, (1,2'-dimethylsilylene)(2,1'-isopropylidene)-bis(indenyl)zirconium dichloride, (1,2'-dimethylsilylene)(2,1'-isopropylidene)-bis(3-methylindenyl)zirconium dichloride, (1,2'-dimethylsilylene)(2,1'-isopropylidene)-bis(3-isopropylindenyl)zirconium dichloride, (1,2'-dimethylsilylene)(2,1'-isopropylidene)-bis(3-n-butylindenyl)zirconium dichloride, and (1,2'-dimethylsilylene)(2,1'-isopropylidene)-bis(3-trimethylsilylmethylindenyl) zirconium dichloride; and these compounds wherein the zirconium is substituted with titanium or hafnium.

The component (B-1) as the component (B) includes dimethyl anilinium tetrakis pentafluorophenyl borate, triethylammonium tetraphenyl borate, tri-n-butylammonium tetraphenyl borate, trimethylammonium tetraphenyl borate, tetraethylammonium tetraphenyl borate, methyl (tri-n-butyl) ammonium tetraphenyl borate, and benzyl (tri-n-butyl) ammonium tetraphenyl borate.

These components (B-1) may be used alone or in combination with two or more kinds. On the other hand, the aluminoxane as the component (B-2) includes methylaluminoxane, ethylaluminoxane, and isobutylaluminoxane. These aluminoxanes may be used alone or in combination with two or more kinds. Alternatively, one or more kinds of the components (B-2) may be used together with one or more kinds of the components (B-1).

As the above-mentioned polymerization catalyst, an organoaluminum compound can be used as the component (C) in addition to the above-mentioned components (A) and (B). The organoaluminum compound as the component (C) includes trimethylaluminum, triethylaluminum, triisopropylaluminum, triisobutylaluminum, dimethylaluminum chloride, diethylaluminum chloride, methylaluminum dichloride, ethylaluminum dichloride, dimethylaluminum fluoride, diisobutylaluminum hydride, diethylaluminum hydride, and ethylaluminum sesquichloride. These organoaluminum compounds may be used alone or in combination with two or more kinds. In the polymerization of propylene, at least one kind of the catalytic components can be supported to a suitable carrier.

The polymerization process is not limited in particular, which may be conducted by slurry polymerization, gas phase polymerization, bulk polymerization, solution polymerization, suspension polymerization, or the like. However, bulk polymerization and solution polymerization are particularly preferable. The polymerization temperature is typically from -100°C to 250°C. The use ratio of the catalyst to the reactive raw material "raw material monomer/component (A)" (mole ratio) is preferably from 1 to $10^8$, more preferably from 10 to $10^5$, further more preferably from $10^2$ to $10^5$. The

polymerization time is typically preferably from 5 minutes to 10 hours. The reaction pressure is typically preferably from normal pressure to 20 MPa (gauge pressure).

Crystalline resin composition:

The crystalline resin composition disclosed in the present application contains 1 to 99% by mass of a low crystalline olefin polymer. If the content of the olefin polymer is less than 1% by mass, the low temperature heat-sealing properties of the nonwoven fabric is scarcely improved. If the content of the olefin polymer is more than 99% by mass, the moldability and the texture are decreased due to the stickiness of the nonwoven fabric, and the strength of the nonwoven fabric is also decreased. From this viewpoint, the content of the olefin polymer is preferably 1 to 49% by mass, more preferably 1 to 40% by mass, further more preferably 3 to 40% by mass. The preferable range when the single fiber is used may be different from that when the core-sheath composite fiber is used. The preferable ranges in the respective cases will be described below.
The crystalline resin composition may contain another thermoplastic resin and an additive as the components other than the low crystalline olefin polymer.
Such a thermoplastic resin includes, for example, the high crystalline olefin polymer, an ethylene-vinyl acetate copolymer, a hydrogenated styrene elastomer, a polyester resin, and a polyamide resin. These may be used alone or in combination with two or more kinds. In these thermoplastic resins, the high crystalline olefin polymer is preferable from the viewpoint of compatibility, textile, flexibility, and the like. The melting point (Tm) of the high crystalline olefin polymer is preferably from 120 to 200°C, more preferably from 130 to 180°C, further more preferably from 150 to 175°C. The melt endotherm ($\Delta H$) is preferably from 50 to 200 J/g, more preferably from 55 to 190 J/g, more preferably from 60 to 150 J/g, more preferably from 70 to 130 J/g, further more preferably from 70 to 110 J/g, particularly preferably from 80 to 110 J/g. The melt flow rate (MFR) of the high crystalline olefin polymer is preferably from 1 to 100 g/10 minutes, more preferably from 10 to 80 g/10 minutes, further more preferably from 15 to 80 g/10 minutes, particularly preferably from 15 to 50 g/10 minutes. Such a high crystalline olefin polymer can easily be produced by the method described in JP-A-2006-103147 or the like.
The high crystalline olefin polymer is preferably an olefin polymer generated by polymerizing one or more kinds of monomers selected from ethylene and $\alpha$-olefins with 3 to 28 carbon atoms, particularly preferably an olefin polymer generated by polymerizing one or more kinds of monomers selected from $\alpha$-olefins with 3 to 28 carbon atoms. These $\alpha$-olefins can be illustrated by the above-mentioned ones. The high crystalline olefin polymer is particularly preferably a propylene homopolymer, a propylene-ethylene random copolymer, a propylene-ethylene-1-butene random copolymer, and a propylene-ethylene block copolymer, more preferably a propylene homopolymer (polypropylene).
As the additive, conventionally well-known additives can be mixed, including, for example, a foaming agent, a crystal nucleating agent, a weathering stabilizer, an ultraviolet absorber, a photostabilizer, a heat-resistant stabilizer, an antistatic agent, a release agent, a flame retarder, a synthetic oil, a wax, an electric property modifier, an antislip agent, an antiblocking agent, a viscosity modifier, a color protector, an anticlouding agent, a lubricant, pigment, a dye, a plasticizer, a softener, an anti-aging agent, a hydrochloric acid absorbent, a chlorine scavenger, an antioxidant, and an anti-adhesive agent.
In the crystalline resin composition used in the present invention, the component as the low crystalline polyolefin melts so as to provide the heat-sealing properties (thermal adhesiveness) as long as the heat-sealing temperature is higher than the melting point of the low crystalline polyolefin even if being lower than the melting points of the thermoplastic resin and the additive.
Based on such a principle, the composition consisting of a high crystalline polyolefin and a low crystalline polyolefin rather than only a high crystalline polyolefin can provide the heat sealing at low temperature. Particularly, the heat-sealing strength increases as the low crystalline polyolefin content increases.

Nonwoven fabric:

The nonwoven fabric disclosed in the present application includes (1) one or more layers, wherein at least one of the layers is formed by using a crystalline resin composition containing 1 to 99% by mass of a low crystalline olefin polymer satisfying the expression (a). Specifically, the nonwoven fabric disclosed in the present application takes any one of the following embodiments 1 to 3.
Embodiment 1: The nonwoven fabric includes one layer formed by using a crystalline resin composition containing 1 to 99% by mass of a low crystalline olefin polymer satisfying the expression (a).
Embodiment 2: The nonwoven fabric includes two layers, wherein at least one of the layers is formed by using a crystalline resin composition and the crystalline resin composition contains 1 to 99% by mass of a low crystalline olefin polymer satisfying the expression (a).
Embodiment 3: The nonwoven fabric includes three or more layers, wherein at least one of the both outermost

layers when the nonwoven fabric has three or more layers is formed by using a crystalline resin composition containing 1 to 99% by mass of a low crystalline olefin polymer satisfying the expression (a).

In the nonwoven fabric including two layers of Embodiment 2, the two layers are preferably formed by using the crystalline resin composition.

In the nonwoven fabric including three or more layers of Embodiment 3, the both outermost layers are preferably formed by using the crystalline resin composition. In the example of the nonwoven fabric consisting of the three layers (AA)/(BB)/(CC), the both outermost layers are the layers (AA) and (CC). In the present invention, at least one of the outermost layers (AA) and (CC) only needs to be formed by using the crystalline resin composition. The both outermost layers may be formed by using the crystalline resin composition.

In the nonwoven fabric (1), the content of the low crystalline olefin polymer in the crystalline resin composition is preferably 1 to 49% by mass, more preferably 3 to 49% by mass, further more preferably 3 to 30% by mass from the viewpoint of the low temperature heat-sealing properties. Particularly, from the viewpoint of significantly improving the low temperature heat-sealing properties, in claim 1, the content of the low crystalline olefin polymer is 7 to 30% by mass.

In the nonwoven fabric consisting of three or more layers of Embodiment 3, according to claim 1, the ratio of the outermost layer formed by using the crystalline resin composition to all the layers is from 1 to 60%, more preferably from 5 to 60%, more preferably from 10 to 60%, further more preferably from 20 to 60%, particularly preferably from 40 to 60% based on areal weight from the viewpoint of the low temperature heat-sealing properties. The areal weight means the weight per unit area.

When the ratio of the outermost layer to all the layers is large, the low temperature heat-sealing properties is preferably more excellent. When the ratio is small, the strength of the nonwoven fabric is preferably increased with excellent low temperature heat-sealing properties.

A layer not formed by using the crystalline resin composition when exists in the nonwoven fabric consisting of two layers of Embodiment 2 and a layer not formed by using the crystalline resin composition in the nonwoven fabric consisting of three or more layers of Embodiment 3 have any component without particular limitation. As the component, typical thermoplastic resins used for a nonwoven fabric can be used. Among these, the high crystalline olefin polymer is preferable, and the high crystalline polypropylene is more preferable. These layers may contain a thermoplastic resin and an additive that can be used with the crystalline resin composition.

Nonwoven fabric formed by using core-sheath composite fiber:

The nonwoven fabric disclosed in the present application includes (2) one or more layers, wherein the layers each consist of a fiber, the fiber of at least one of the layers is a core-sheath composite fiber containing a crystalline resin composition as the sheath component, the ratio of the sheath component is 1 to 99% by mass based on the total amount of the core component and the sheath component, and the crystalline resin composition contains 1 to 99% by mass of a low crystalline olefin polymer satisfying the expression (a). Specifically, the nonwoven fabric disclosed in the present application takes any one of the following embodiments 4 to 6.

Embodiment 4: The nonwoven fabric includes one layer consisting of a fiber, wherein the fiber is a core-sheath composite fiber containing a crystalline resin composition as the sheath component, the ratio of the sheath component is 1 to 99% by mass based on the total amount of the core component and the sheath component, and the crystalline resin composition contains 1 to 99% by mass of a low crystalline olefin polymer satisfying the expression (a).

Embodiment 5: The nonwoven fabric includes two layers, wherein the layers each consist of a fiber, the fiber of at least one of the layers is a core-sheath composite fiber containing a crystalline resin composition as the sheath component, the ratio of the sheath component is 1 to 99% by mass based on the total amount of the core component and the sheath component, and the crystalline resin composition contains 1 to 99% by mass of a low crystalline olefin polymer satisfying the following expression (a).

Embodiment 6: The nonwoven fabric includes three or more layers, wherein the layers each consist of a fiber, the fibers of the both outermost layers each are a core-sheath composite fiber containing a crystalline resin composition as the sheath component, the ratio of the sheath component is 1 to 99% by mass based on the total amount of the core component and the sheath component, and the crystalline resin composition contains 1 to 99% by mass of a low crystalline olefin polymer satisfying the expression (a).

The crystalline resin composition may contain another thermoplastic resin and an additive as the components other than the low crystalline olefin polymer, as described above.

The content of the core-sheath composite fiber in such a nonwoven fabric is preferably 1 to 100% by mass, more preferably 10 to 100% by mass, more preferably 30 to 100% by mass, more preferably 50 to 100% by mass, more preferably 70 to 100% by mass, mass further more preferably 80 to 100% by mass, particularly preferably 90 to 100% by mass, most preferably substantially 100% by mass.

The ratio of the sheath component in the core-sheath composite fiber is required to be 1 to 99% by mass based

on the total amount of the core component and the sheath component from the viewpoint of the heat-sealing strength and the low temperature heat-sealing properties. If the ratio of the sheath component is less than 1% by mass, the thickness of the sheath part is decreased too much so as not to provide the low temperature heat-sealing properties of the nonwoven fabric. If the ratio is more than 99% by mass, the strength of the nonwoven fabric is decreased. From this viewpoint, the ratio of the sheath component is preferably 1 to 49% by mass, more preferably 5 to 49% by mass, more preferably 15 to 49% by mass, further more preferably 25 to 49% by mass, particularly preferably 30 to 49% by mass based on the total amount of the core component and the sheath component.

In the nonwoven fabric consisting of two layers of Embodiment 5, fibers composing the both two layers each are preferably a core-sheath composite fiber containing the crystalline resin composition as the sheath component. In the nonwoven fabric consisting of three or more layers of Embodiment 6, fibers composing the both outermost layers each are preferably a core-sheath composite fiber containing the crystalline resin composition as the sheath component. the nonwoven fabric (2) according to claim 2, the content of the low crystalline olefin polymer in the crystalline resin composition is

15 to 35% by mass from the viewpoint of the low temperature heat-sealing properties.

In the nonwoven fabric consisting of three or more layers of Embodiment 6, the ratio of the outermost layer formed by using the crystalline resin composition to all the layers is preferably from 1 to 99%, more preferably from 1 to 60%, more preferably from 5 to 60%, more preferably from 10 to 60%, further more preferably from 20 to 60%, particularly preferably from 40 to 60% based on areal weight from the viewpoint of the low temperature heat-sealing properties.

In the core-sheath composite fiber, the sheath component is as described above. The core component is not limited in particular. As the core component, typical thermoplastic resins or compositions containing these thermoplastic resins used for a nonwoven fabric can be used. Among these thermoplastic resins, the high crystalline olefin polymer is preferable, and the high crystalline polypropylene is more preferable. The core component may contain another thermoplastic resin and an additive in the same way as the crystalline resin composition in the sheath component. As the core component, the crystalline resin composition defined as a sheath component may be used as long as being different from the sheath component to be used.

A layer formed by using a fiber other than the core-sheath composite fiber when exists in the nonwoven fabric consisting of two layers and the layer formed by using a fiber other than the core-sheath composite fiber in the nonwoven fabric consisting of three or more layers each have any component without particular limitation. As the component, a typical thermoplastic resin used for a nonwoven fabric can be used. However, among these, the high crystalline olefin polymer is preferable, and the high crystalline polypropylene is more preferable. As the component of these layers may contain a thermoplastic resin and an additive in the same way as the crystalline resin composition described above. The fiber of the layer formed by using a fiber other than the core-sheath composite fiber may be a core-sheath composite fiber departed from the above-mentioned range. However, a single fiber is preferable unless necessary.

In the core-sheath composite fiber, the difference between the melting points of a thermoplastic resin composing the core component and a component composing the sheath component (i.e. at least one of the low crystalline olefin polymer contained in the crystalline resin composition; and a thermoplastic resin and an additive as the components other than the low crystalline olefin polymer) is preferably less than 20°C from the viewpoint of the strength of the nonwoven fabric and the spinnability. The difference between these melting points is more preferably 18°C or less, further more preferably 15°C or less. Particularly, the core-sheath composite fiber preferably contains materials with the same melting point.

Method of producing nonwoven fabric:

The method of producing the nonwoven fabric of the present invention is not limited in particular. As the method, a well-known dry method, wet method, spunbond method (including melt-blow method), and the like can be used. Among these, a spunbond method is preferable. A nonwoven fabric produced by a spunbond method is hereinafter referred to as a spunbond nonwoven fabric.

Typically, in the spunbond method, the nonwoven fabric is produced in such a manner that melt-kneaded crystalline resin composition is spun, stretched, and filamentized to form continuous long fibers. In the subsequent process, the continuous long fibers are accumulated and entangled on a moving collecting surface. In this method, a nonwoven fabric may be produced continuously, which has a large strength since fibers composing the nonwoven fabric are stretched continuous long fibers.

As the spunbond method, conventional well-known methods can be used. Fiber can be produced by extruding a molten polymer, for example, from a large nozzle with several thousands of pores or a group of small nozzles with about 40 pores. The ejection amount of fiber per single pore is preferably from 0.1 to 1 g/minute, more preferably from 0.3 to 0.7 g/minute. After ejected from the nozzle, melt fiber is cooled by a cross-flow cold air system, drawn away from the nozzle, and stretched by highspeed airflow. Generally, there exist two kinds of air-damping, both of which use a venturi effect. In the first air-damping, a filament is stretched by using a suction slot (slot stretching). This method is

conducted by using the width of a nozzle or the width of a machine. In the second air-damping, a filament is stretched through a nozzle or a suction gun. A filament formed by this air-damping is collected to form a web on a screen (wire) or a pore forming belt. Subsequently, the web passes a compression roll and then between heating calendar rolls; and bounded at the part where the embossment part on one roll includes from 10 to 40% of the area of the web to form a nonwoven fabric.

As the bonding, thermal bonding including emboss, hot air, and calendar, adhesive bonding, and mechanical bonding including needle punch and water punch can be used.

The method of producing a multilayered nonwoven fabric is also not limited in particular. The multilayered nonwoven fabric can be produced by a well-known method. For example, a first nonwoven fabric is produced by using a crystalline resin composition containing the low crystalline olefin polymer. On the first nonwoven fabric, a second nonwoven fabric is formed by a spunbond method, a melt blowing method, or the like. Optionally, a third nonwoven fabric is overlaid on the second layer and fusion-bounded by being heated under pressure. There are various laminate means for forming the multilayered nonwoven fabric, such as thermal bonding and adhesive bonding. A convenient and inexpensive thermal bonding, particularly heat embossing roll can also be used. The heat embossing roll can conduct lamination with a well-known laminate device equipped with an embossing roll and a flat roll. As the embossing roll, emboss patterns of various shapes can be used, which include a lattice pattern wherein each adhesion part is consecutive, an independent lattice pattern, and arbitrary distribution.

In the present invention, the flexibility of the nonwoven fabric can be controlled by adjusting the temperature and the spinning speed during embossing.

When the spunbond nonwoven fabric with high flexibility is obtained by controlling the temperature during embossing, the temperature preferably falls within the range of from 90 to 130°C. When the embossing temperature is 90°C or more, fibers sufficiently fuses with each other to increase the strength of the nonwoven fabric. When the embossing temperature is 130°C or less, the low crystalline olefin polymer may not completely melt into a film so as to form a nonwoven fabric with high flexibility.

The textile product formed by using the nonwoven fabric of the present invention, for example, can includes a material for a disposable diaper, an elastic material for a diaper cover, an elastic material for a sanitary product, an elastic material for a hygienic product, an elastic tape, an adhesive plaster, an elastic material for a clothing material, an electric insulating material for a clothing material, a thermal insulating material for a clothing material, a protective garment, a headwear, a face mask, a glove, an athletic supporter, an elastic bandage, a base cloth for a wet dressing, an antislipping base cloth, a vibration dampener, a finger stall, an air filter for a clean room, an electret filter, a separator, a thermal insulating material, a coffee bag, a food packaging material, a ceiling surface material for an automobile, an acoustic insulating material, a cushioning material, a dust proof material for a speaker, an air cleaner material, an insulator surface material, a backing material, an adhesive nonwoven fabric sheet, various automobile members including a door trim material, various cleaning materials including a cleaning material for a copying machine, a surface material and a backing material of a carpet, an agricultural rolled cloth, a wood draining material, a shoe material such as a surface material for sport shoes, a member for a bag, an industrial sealant, a wiping material, and a bed sheet. In particular, the nonwoven fabric of the present invention is preferably used for a hygienic product such as a paper diaper.

## EXAMPLES

The present invention will be more specifically explained with reference to Examples but is not limited thereto.

Each of the physical properties of the low crystalline polypropylene obtained in the following Preparation Example 1 was measured as follows.

Measurement of melting point:

The melting point (Tm) was determined as the peak top observed on the highest temperature side of a melt endothermic curve obtained by maintaining the temperature of 10 mg of the sample at -10°C for 5 minutes and then increasing it at 10°C/minute by using a differential scanning calorimeter (DSC-7 available from PerkinElmer, Inc.) under a nitrogen atmosphere.

Measurement of crystallization temperature:

The crystallization temperature (Tc) was determined as the peak top observed on the highest temperature side of an exothermic curve obtained by maintaining the temperature of 10 mg of the sample at 220°C for 5 minutes and then decreasing it to -30°C at 20°C/minute by using a differential scanning calorimeter (DSC-7 available from PerkinElmer, Inc.) under a nitrogen atmosphere.

Evaluation of stereoregularity: NMR measurement

The $^{13}C$-NMR spectrum was measured with the following device under the following conditions. The peak assignment followed to the method proposed by A. Zambelli, et al., "Macromolecules, vol. 8, p. 687 (1975)".

Device: $^{13}C$-NMR spectrometer, JNM-EX400 series available from JEOL, Ltd.
Method: proton complete decoupling
Concentration: 220 mg/mL
Solvent: mixed solvent of 1,2,4-trichlorobenzene and deuterated benzene at 90:10 (volume ratio)
Temperature: 130°C
Pulse width: 45°
Pulse repetition time: 4 seconds
Accumulation: 10,000 times

Calculating Expressions:

$M = m/S \times 100$
$R = \gamma/S \times 100$
$S = P\beta\beta + P\alpha\beta + P\alpha\gamma$
S: Signal intensity of carbon atoms in side chain methyl of all the propylene units
$P\beta\beta$: 19.8 to 22.5 ppm
$P\alpha\beta$: 18.0 to 17.5 ppm
$P\alpha\gamma$: 17.5 to 17.1 ppm
$\gamma$: racemic pentad chain, 20.7 to 20.3 ppm
m: mesopentad chain, 21.7 to 22.5 ppm

The mesopentad fraction [mmmm], the racemic pentad fraction [rrrr] and the racemic-meso-racemic-meso pentad fraction [rmrm] are measured in accordance with the method proposed by A. Zambelli, et al., "Macromolecules, vol. 6, p. 925 (1973)", in the pentad units of the polypropylene molecular chain that are measured based on a signal of the methyl group in the $^{13}C$-NMR spectrum. As the mesopentad fraction [mmmm] increases, the stereoregularity increases. The triad fractions [mm], [rr], and [mr] were also calculated by the above-mentioned method.

Measurement of weight-average molecular weight (Mw) and molecular weight distribution (Mw/Mn):

The weight average molecular weight (Mw) and the molecular weight distribution (Mw/Mn) were determined by gel permeation chromatography (GPC). The following device and conditions were used in this measurement to obtain a polystyrene conversion weight average molecular weight.

GPC device

Column: TOSO GMHHR-H(S)HT

Detector: RI detector for liquid chromatography, Waters 150C

Measurement Conditions

Solvent: 1,2,4-trichlorobenzene
Measurement temperature: 145°C
Flow rate: 1.0 mL/minute
Sample concentration: 2.2 mg/mL
Injection amount: 160 μL
Calibration curve: Universal Calibration

Analysis software: HT-GPC (ver. 1.0)

Measurement of melt flow rate (MFR):

The MFR was measured at a temperature of 230°C under a weight of 21.18 N in accordance with JIS K7210.

Preparation Example 1 (low crystalline polypropylene):

In a stainless steel reactor equipped with a stirrer, the inner capacity of which is 20 L, n-heptane, triisobutylaluminum, and a catalyst component which was obtained by bringing dimethyl anilinium tetrakis pentafluorophenyl borate, (1,2'-dimethylsilylene) (2,1'-dimethylsilylene)-bis(3-trimethylsilylmethylindenyl)zirconium dichloride, triisobutylaluminum, and propylene into contact with each other in a mass ratio of 1:2:20 in terms of zirconium were continuously fed at 20 L/h, 15 mmol/h, and 6 $\mu$mol/h, respectively.

The mixture was polymerized at a polymerization temperature set at 67°C by continuously feeding propylene and hydrogen to maintain a hydrogen concentration of 0.8% by mol in the gas phase of the reactor and a total pressure of 0.7 MPa in the reactor (gauge pressure).

In the obtained polymerization solution, "Irganox 1010" (available from Ciba Specialty Chemicals Co., Ltd.) as a stabilizer was added so that the content ratio is 500 ppm by mass. Subsequently, n-heptane as a solvent was removed to obtain a low crystalline polypropylene with the physical properties shown in Table 1.

Table 1

| | | Preparation Example 1 |
|---|---|---|
| (b) | Melting point (Tm) (°C) | 70 |
| (c) | Melt endotherm ($\Delta$H) (J/g) | 28 |
| (a) | $\Delta H \geq 6 \times (Tm - 140°C)$ | Satisfied |
| | Crystallization temperature (Tc) (°C) | 36 |
| | [mm] (% by mol) | 63.6 |
| (d) | [mmmm] (% by mol) | 46.5 |
| (e) | [rrrr]/(1-[mmmm]) | 0.036 |
| (f) | [rmrm] (% by mol) | 3.0 |
| (g) | $[mm]\times[rr]/[mr]^2$ | 1.4 |
| (h) | Mw | 120,000 |
| (i) | Mw/Mn | 2.0 |
| | MFR (g/10 minutes) | 60 |

The heat-sealing strengths of the spunbond nonwoven fabrics obtained in the following Examples 1 and 2 and Comparative Example 1 were measured at each temperature as described below. Measurement of heat-sealing strength

A test piece with a length of 200 mm and a width of 40 mm was taken from the obtained nonwoven fabric in the machine direction (MD). Two nonwoven fabrics were heat-sealed at 165°C, 170°C, or 175°C under a pressure of 0.2 MPa for 2 seconds with a heat sealing tester (heat gradient tester available from TOYO SEIKI KOGYO CO.LTD). Five heat blocks are connected, the thermal bonding area of each block is 250 $mm^2$ (25 mm $\times$ 10 mm).

For the nonwoven fabric sample heat-sealed as described above, the unbounded parts of two nonwoven fabric samples each were gripped with a chuck and elongated at a tension rate of 200 mm/minute, and the load capacity when the nonwoven fabrics were released from each other was measured, with a tensile tester (autograph 201 type available from INTESCO), so as to determine the heat-sealing strength. When the nonwoven fabrics were broken before released from each other, "Broken" was wrote down in the tables herein.

Example 1 (Production of multilayered spunbond nonwoven fabric):

The low crystalline polypropylene obtained in Preparation Example 1 was mixed with a high crystalline polypropylene (PP, NOVATEC SA03 available from Japan Polypropylene Corporation, MFR = 30 g/10 minutes, melting

point = about 164°C, melt endotherm = 94 J/g) in a mixing ratio of 10 and 90% by mass, respectively, to obtain a crystalline resin composition. The obtained crystalline resin composition was used to produce a nonwoven fabric with a spunbonding device as described below.

The raw materials were spun so that the materials were melt-extruded with a single screw extruder at a resin temperature of 230°C and so that the melt-extruded materials were ejected from a core-sheath composite nozzle with a nozzle diameter of 0.3 mm (the number of pores: 841) at a rate of 0.5 g/minute per single pore. The spun fiber was sucked at an ejector pressure of 2.0 kg/cm$^2$ while being cooled by air and then was laminated on a net surface moving at a line speed of 49 m/min to obtain a nonwoven fabric (S) (first layer).

On this nonwoven fabric (S), the high crystalline polypropylene fiber is directly deposited by the above-mentioned spunbond method to form a spunbond nonwoven fabric (C) (second layer). Furthermore, a nonwoven fabric (S) (third layer) separately produced in the same way as the first layer was overlaid. The overlaid nonwoven fabrics were fusion-bound at a high temperature under pressure with a heated roll with a temperature of 135°C to obtain a multilayered nonwoven fabric with the structure of spunbond nonwoven fabric (S) / spunbond nonwoven fabric (C) / spunbond nonwoven fabric (S). Table 2 shows the areal weight (gsm: g/m$^2$) of the each layer and the heat-sealing strength at a predetermined temperature of the obtained nonwoven fabric.

Reference

Example 2 (Production of multilayered spunbond nonwoven fabric):

A spunbond nonwoven fabric cloth (S) was produced in the same way as Example 1 except that the low crystalline polypropylene was mixed with the high crystalline polypropylene (PP, NOVATEC SA03 available from Japan Polypropylene Corporation) in a mixing ratio of 5 and 95% by mass, respectively, to obtain a crystalline resin composition. Table 2 shows the areal weight (gsm: g/m$^2$) of the each layer and the heat-sealing strength at a predetermined temperature of the obtained nonwoven fabric.

Comparative Example 1 (Production of multilayered spunbond nonwoven fabric):

A spunbond nonwoven fabric (S) was produced in the same way as Example 1 except that a crystalline resin composition consisting of only the high crystalline polypropylene (PP, NOVATEC SA03 available from Japan Polypropylene Corporation) was used. Table 2 shows the areal weight (gsm: g/m$^2$) of the each layer and the heat-sealing strength at a predetermined temperature of the obtained nonwoven fabric.

Table 2

<table>
<tr><td colspan="3" rowspan="2"></td><td colspan="2">Example</td><td>Comparative Example</td></tr>
<tr><td>1</td><td>2</td><td>1</td></tr>
<tr><td rowspan="8">Multilayered nonwoven fabric composition</td><td rowspan="3">First layer (S)</td><td>High crystalline polypropylene</td><td>90</td><td>95</td><td>100</td></tr>
<tr><td>Low crystalline polypropylene with low melting point (Preparation Example 1)</td><td>10</td><td>5</td><td>0</td></tr>
<tr><td>Areal weight (gsm)</td><td>4</td><td>4</td><td>4</td></tr>
<tr><td rowspan="2">Second layer (C)</td><td>High crystalline polypropylene</td><td>100</td><td>100</td><td>100</td></tr>
<tr><td>Areal weight (gsm)</td><td>8</td><td>8</td><td>8</td></tr>
<tr><td rowspan="3">Third layer (S)</td><td>High crystalline polypropylene</td><td>90</td><td>95</td><td>100</td></tr>
<tr><td>Low crystalline polypropylene with low melting point (Preparation Example 1)</td><td>10</td><td>5</td><td>0</td></tr>
<tr><td>Areal weight (gsm)</td><td>4</td><td>4</td><td>4</td></tr>
</table>

(continued)

| | | | Example | | Comparative Example |
|---|---|---|---|---|---|
| | | | 1 | 2 | 1 |
| Properties of nonwoven fabric | Heat-sealing strength (gf) | Heat-sealing temperature: 165°C | 4 | 2 | 0 |
| | | Heat-sealing temperature: 170°C | 80 | 37 | 26 |
| | | Heat-sealing temperature: 175°C | Broken | 271 | 265 |

Table 2 shows that the multilayered nonwoven fabric produced in Example 1 exhibits a significantly higher heat-sealing strength, particularly at 170 to 175°C than that produced in Comparative Example 1. Table 2 also shows that Example 1 obtains a heat-sealing strength of 30 gf or more (70 gf or more in the higher case) at 170°C and of 270 gf or more at 175°C. Therefore, it is clear that Example 1 has excellent low temperature heat-sealing properties. The multilayered nonwoven fabric produced with Example 2 has also excellent low temperature heat-sealing properties compared with that produced with Comparative Example 1. In the first and the third layers, it is clear that Example 1 wherein the content of the low crystalline polypropylene is 10% by mass increased the low temperature heat-sealing properties more significantly than Example 2 wherein that is 5% by mass.

The heat-sealing strengths of the spunbond nonwoven fabric cloths obtained in the following Examples 3 to 5 and Comparative Example 2 were measured at a predetermined temperature as described above.

Example 3: Production of spunbond nonwoven fabric formed by using core-sheath composite fiber

As the sheath component, the low crystalline polypropylene obtained in Preparation Example 1 was mixed with the high crystalline polypropylene (PP, NOVATEC SA03 available from Japan Polypropylene Corporation) in a mixing ratio of 25 and 75% by mass, respectively, to obtain a crystalline resin composition. As the core component, only the high crystalline polypropylene (PP, NOVATEC SA03 available from Japan Polypropylene Corporation) was used. These components were used to produce a nonwoven fabric with a spunbonding device as described below.

The raw materials of the sheath component resin and the core component resin were spun so that the materials were each separately melt-extruded with a single screw extruder at a resin temperature of 230°C and so that the melt-extruded materials were ejected from a core-sheath composite nozzle with a nozzle diameter of 0.6 mm (the number of pores: 797) at a rate of 0.5 g/minute per single pore at a ratio of the sheath component [sheath / (core + sheath)] of 40% by mass.

The spun fiber was sucked at an ejector pressure of 2.0 $kg/cm^2$ while being cooled by air and then was laminated on a net surface moving at a line speed of 45 m/min. The fiber bundle laminated on the net surface was embossed with an embossing roll heated to 115°C under a line pressure of 40 kg/cm and wound to a winding roll.

Table 3 shows the heat-sealing strength at a predetermined temperature of the obtained nonwoven fabric.

Example 4: Production of spunbond nonwoven fabric formed by using core-sheath composite fiber

The nonwoven fabric was produced in the same way as Example 3 except that the melt-extruded materials were ejected in a ratio of the sheath component [sheath / (core + sheath)] of 20% by mass.

Table 3 shows the heat-sealing strength at a predetermined temperature of the obtained nonwoven fabric.

Example 5: Production of spunbond nonwoven fabric formed by using core-sheath composite fiber

The nonwoven fabric was produced in the same way as Example 3 except that the melt-extruded materials were ejected in a ratio of the sheath component [sheath / (core + sheath)] of 10% by mass.

Table 3 shows the heat-sealing strength at a predetermined temperature of the obtained nonwoven fabric.

Comparative Example 2

The nonwoven fabric was produced in the same way as Example 3 except that the high crystalline polypropylene (PP, NOVATEC SA03 available from Japan Polypropylene Corporation, MFR = 30 g/10 minutes, melting point = about

164°C, melt endotherm = 94 J/g) was used as the sheath component.

Table 3 shows the heat-sealing strength at a predetermined temperature of the obtained nonwoven fabric.

Table 3

| | | | Example | | | Comparative Example |
|---|---|---|---|---|---|---|
| | | | 3 | 4 | 5 | 2 |
| Fiber composition | Core component (% by mass) | High crystalline polypropylene | 100 | 100 | 100 | 100 |
| | Sheath component (% by mass) | High crystalline polypropylene | 75 | 75 | 75 | 100 |
| | | Low crystalline polypropylene with low melting point (Preparation Example 1) | 25 | 25 | 25 | 0 |
| | [Sheath component/(Sheath component + Core component)] (% by mass) | | 40 | 20 | 10 | 20 |
| Properties of nonwoven fabric | Heat-sealing strength (gf) | Heat-sealing temperature: 165°C | 63 | 46 | 42 | 0 |
| | | Heat-sealing temperature: 170°C | 442 | 264 | 200 | 20 |
| | | Heat-sealing temperature: 175°C | Broken | Broken | Broken | 176 |

Table 3 shows that the multilayered nonwoven fabrics produced in Examples 3 to 5 exhibit a significantly higher heat-sealing strength, particularly at 165 to 175°C than that produced in Comparative Example 2. Table 3 also shows that Examples 3 to 5 obtain a heat-sealing strength of 40 gf or more at 165°C and of 200 gf (400 gf or more in the higher case) at 170°C and a heat-sealing strength enough to be broken at 175°C. Therefore, it is clear that Examples 3 to 5 have excellent low temperature heat-sealing properties.

INDUSTRIAL APPLICABILITY

The nonwoven fabric of the present invention is useful for, for example, a material for a disposable diaper, an elastic material for a diaper cover, an elastic material for a sanitary product, an elastic material for a hygienic product, an elastic tape, an adhesive plaster, an elastic material for a clothing material, an electric insulating material for a clothing material, a thermal insulating material for a clothing material, a protective garment, a headwear, a face mask, a glove, an athletic supporter, an elastic bandage, a base cloth for a wet dressing, an antislipping base cloth, a vibration dampener, a finger stall, an air filter for a clean room, an electret filter, a separator, a thermal insulating material, a coffee bag, a food packaging material, a ceiling surface material for an automobile, an acoustic insulating material, a cushioning material, a dust proof material for a speaker, an air cleaner material, an insulator surface material, a backing material, an adhesive nonwoven fabric sheet, various automobile members including a door trim material, various cleaning materials including a cleaning material for a copying machine, a surface material and a backing material of a carpet, an agricultural rolled cloth, a wood draining material, a shoe material such as a surface material for sport shoes, a member for a bag, an industrial sealant, a wiping material, and a bed sheet. In particular, the nonwoven fabric of the present invention is preferably used for a hygienic product such as a paper diaper.

**Claims**

**1.** A nonwoven fabric comprising three or more layers, wherein
at least one layer of the two outermost layers of the nonwoven fabric of multi-layer consisting of three or more layers is formed by using a crystalline resin composition containing 7 to 30% by mass of a low crystalline olefin polymer satisfying the following expression (a):

$$(a)\ \Delta H \geq 6 \times (Tm - 140°C)$$

wherein ΔH represents a melt endotherm, and Tm represents a melting point, wherein the ratio of the outermost layer formed by using the crystalline resin composition to all the layers is 1 to 60% based on areal weight, wherein the low crystalline olefin polymer is a polypropylene polymer and wherein the low crystalline olefin polymer satisfies the following conditions (b) and (c):

(b) The melting point (Tm) is 0°C or more and less than 120°C,
(c) The melt endotherm (ΔH) is from 1 to 100 J/g.

**2.** A nonwoven fabric comprising one or more layers, wherein
a fiber forming the nonwoven fabric made of one layer, or
a fiber forming at least one layer in the nonwoven fabric composed of two layers, or a fiber forming the outermost layer of the nonwoven fabric of the multi-layer consisting of three or more layers
each are a core-sheath composite fiber containing a crystalline resin composition as the sheath component, the ratio of the sheath component is 1 to 99% by mass based on the total amount of the core component and the sheath component, and the crystalline resin composition contains 15 to 35% by mass of a low crystalline olefin polymer satisfying the following expression (a):

$$(a)\ \Delta H \geq 6 \times (Tm - 140°C)$$

wherein ΔH represents a melt endotherm, and Tm represents a melting point, wherein the low crystalline olefin polymer is a polypropylene polymer and wherein the low crystalline olefin polymer satisfies the following conditions (b) and (c):

(b) The melting point (Tm) is 0°C or more and less than 120°C,
(c) The melt endotherm (ΔH) is from 1 to 100 J/g.

**3.** The nonwoven fabric according to claim 2, wherein the ratio of the sheath component is 1 to 49% by mass based on the total amount of the core component and the sheath component.

**4.** The nonwoven fabric according to claim 2 or 3, wherein in the nonwoven fabric having three or more layers, the ratio of the outermost layer formed by using the crystalline resin composition to all the layers is 1 to 99% based on areal weight.

**5.** The nonwoven fabric according to any one of claims 1 to 4, wherein the low crystalline olefin polymer is a low crystalline polypropylene polymer satisfying the following expressions (d) to (i):

$$(d)\ [mmmm] = 20 \text{ to } 60\% \text{ by mol}$$

$$(e)\ [rrrr]/(1-[mmmm]) \leq 0.1$$

$$(f)\ [rmrm] > 2.5\% \text{ by mol}$$

$$(g)\ [mm]\times[rr]/[mr]^2 \leq 2.0$$

$$(h)\ \text{Weight-average molecular weight (Mw)} = 10{,}000 \text{ to } 200{,}000,$$

and

$$(i)\ \text{Molecular weight distribution } (Mw/Mn) < 4,$$

wherein [mmmm] represents a mesopentad fraction, [rrrr] represents a racemic pentad fraction, [rmrm] represents a racemic-meso-racemic-meso pentad fraction, [mm] represents a mesotriad fraction, [rr] represents a racemic triad fraction, and [mr] represents a meso-racemic triad fraction.

**6.** The nonwoven fabric according to any one of claims 3 to 5, wherein the ratio of the sheath component is 25 to 49% by mass based on the total amount of the core component and the sheath component.

**7.** The nonwoven fabric according to any one of claims 1 to 6, wherein a melt flow rate (MFR) of the low crystalline olefin polymer is 40 to 80 g/10 minutes.

**8.** The nonwoven fabric according to claim 5, wherein the weight-average molecular weight (Mw) is 100,000 to 140,000.

**9.** The nonwoven fabric according to any one of claims 1 to 8, wherein the crystalline resin composition comprises a high crystalline polypropylene, wherein a melt flow rate (MFR) of the high crystalline polypropylene is from 1 to 100 g/10 minutes.

**10.** A textile product formed by using the nonwoven fabric according to any one of claims 1 to 9.

**Patentansprüche**

**1.** Ein Vliesstoff, umfassend drei oder mehr Schichten, wobei
mindestens eine Schicht der beiden äußersten Schichten des mehrschichtigen, aus drei oder mehr Schichten bestehenden Vliesstoffes
unter Verwendung einer kristallinen Harzzusammensetzung gebildet ist, die 7 bis 30 Massen-% eines niedrigkristallinen Olefinpolymers enthält, welches den folgenden Ausdruck (a) erfüllt:

$$(a)\ \Delta H \geq 6 \times (Tm - 140°C)$$

wobei $\Delta$H eine Schmelzendotherme bedeutet und Tm einen Schmelzpunkt bedeutet, wobei das Verhältnis der unter Verwendung der kristallinen Harzzusammensetzung gebildeten äußersten Schicht zu allen Schichten 1 bis 60%, bezogen auf das Flächengewicht, beträgt, wobei das niedrigkristalline Olefinpolymer ein Polypropylen-Polymer ist und wobei das niedrigkristalline Olefinpolymer die folgenden Bedingungen (b) und (c) erfüllt:

(b) der Schmelzpunkt (Tm) beträgt 0°C oder mehr und weniger als 120°C,
(c) die Schmelzendotherme ($\Delta$H) beträgt 1 bis 100 J/g.

**2.** Ein Vliesstoff, umfassend eine oder mehrere Schichten, wobei
eine Faser, die den Vliesstoff aus einer Schicht bildet, oder
eine Faser, die mindestens eine Schicht in dem aus zwei Schichten bestehenden Vliesstoff bildet, oder
eine Faser, die die äußerste Schicht des aus drei oder mehr Schichten bestehenden mehrschichtigen Vliesstoffes bildet
jeweils eine Kern-Schale-Verbundfaser sind, welche eine kristalline Harzzusammensetzung als Schalen-Komponente enthält, wobei das Verhältnis der Schalen-Komponente 1 bis 99 Massen-%, bezogen auf die Gesamtmenge der Kern-Komponente und der Schalenkomponente, beträgt und die kristalline Harzzusammensetzung 15 bis 35 Massen-% eines niedrigkristallinen Olefinpolymers enthält, welches den folgenden Ausdruck (a) erfüllt:

$$(a)\ \Delta H \geq 6 \times (Tm - 140°C)$$

wobei $\Delta$H eine Schmelzendotherme bedeutet und Tm einen Schmelzpunkt bedeutet, wobei das niedrigkristalline Olefinpolymer ein Polypropylen-Polymer ist und wobei das niedrigkristalline Olefinpolymer die folgenden Bedingungen (b) und (c) erfüllt:

(b) der Schmelzpunkt (Tm) beträgt 0°C oder mehr und weniger als 120°C,
(c) die Schmelzendotherme (ΔH) beträgt 1 bis 100 J/g.

**3.** Der Vliesstoff nach Anspruch 2, wobei das Verhältnis der Schalen-Komponente 1 bis 49 Massen-%, bezogen auf die Gesamtmenge der Kern-Komponente und der Schalen-Komponente, beträgt.

**4.** Der Vliesstoff nach Anspruch 2 oder 3, wobei in dem Vliesstoff mit drei oder mehr Schichten das Verhältnis der unter Verwendung der kristallinen Harzzusammensetzung gebildeten äußersten Schicht zu allen Schichten 1 bis 99%, bezogen auf das Flächengewicht, beträgt.

**5.** Der Vliesstoff nach einem der Ansprüche 1 bis 4, wobei das niedrigkristalline Olefinpolymer ein niedrigkristallines Polypropylen-Polymer ist, welches die folgenden Ausdrücke (d) bis (i) erfüllt:

$$\text{(d) [mmmm]} = 20 \text{ bis } 60 \text{ Mol-\%}$$

$$\text{(e) [rrrr]} / (1-\text{[mmmm]}) \leq 0{,}1$$

$$\text{(f) [rmrm]} > 2{,}5 \text{ Mol-\%}$$

$$\text{(g) [mm]} \times \text{[rr]}/\text{[mr]}^2 \leq 2{,}0$$

$$\text{(h) Gewichtsmittel des Molekulargewichts (Mw)} = 10.000 \text{ bis } 200.000$$

und

$$\text{(i) Molekulargewichtsverteilung (Mw/Mn)} < 4,$$

wobei [mmmm] eine Mesopentadenfraktion bedeutet, [rrrr] eine racemische Pentadenfraktion bedeutet, [rmrm] eine racemische-mesoracemische Mesopentadenfraktion bedeutet, [mm] eine Mesotriadenfraktion bedeutet, [rr] eine racemische Triadenfraktion bedeutet und [mr] eine meso-racemische Triadenfraktion bedeutet.

**6.** Der Vliesstoff nach einem der Ansprüche 3 bis 5, wobei das Verhältnis der Schalen-Komponente 25 bis 49 Massen-%, bezogen auf die Gesamtmenge der Kern-Komponente und der Schalen-Komponente, beträgt.

**7.** Der Vliesstoff nach einem der Ansprüche 1 bis 6, wobei eine Schmelzflussrate (MFR) des niedrigkristallinen Olefinpolymers 40 bis 80 g/10 Minuten beträgt.

**8.** Der Vliesstoff nach Anspruch 5, wobei das Gewichtsmittel des Molekulargewichts (Mw) 100.000 bis 140.000 beträgt.

**9.** Der Vliesstoff nach einem der Ansprüche 1 bis 8, wobei die kristalline Harzzusammensetzung ein hochkristallines Polypropylen umfasst, wobei eine Schmelzflussrate (MFR) des hochkristallinen Polypropylens 1 bis 100 g/10 Minuten beträgt.

**10.** Ein Textilprodukt, gebildet unter Verwendung des Vliesstoffes nach einem der Ansprüche 1 bis 9.

## Revendications

**1.** Etoffe non tissée comprenant trois couches ou plus, dans laquelle au moins une couche des deux couches les plus extérieures de l’étoffe multicouche non tissée constituée de trois couches ou plus est formée par utilisation d’une composition de résine cristalline contenant 7 à 30 % en masse d’un polymère oléfinique faiblement cristallin satisfaisant l'expression (a) suivante :

$$\text{(a)}\quad \Delta H \geq 6 \times (Tm - 140\ °C)$$

dans laquelle ΔH représente un endotherme de fusion, et Tm représente un point de fusion,
dans laquelle le rapport de la couche la plus extérieure formée par utilisation de la composition de résine cristalline à toutes les couches est de 1 à 60 % sur la base du poids surfacique, dans laquelle le polymère oléfinique faiblement cristallin est un polymère de polypropylène et dans laquelle le polymère oléfinique faiblement cristallin satisfait les conditions (b) et (c) suivantes :

(b) le point de fusion (Tm) est de 0 °C ou plus et inférieur à 120 °C,
(c) l'endotherme de fusion (ΔH) est de 1 à 100 J/g.

**2.** Etoffe non tissée comprenant une ou plusieurs couches, dans laquelle
une fibre formant l'étoffe non tissée constituée d'une seule couche, ou
une fibre formant au moins une couche dans l'étoffe non tissée composée de deux couches, ou
une fibre formant la couche la plus extérieure de l'étoffe multicouche non tissée constituée de trois couches ou plus est chacune une fibre composite coeur-gaine contenant une composition de résine cristalline en tant que composant de gaine, la proportion du composant de gaine est de 1 à 99 % en masse par rapport à la quantité totale du composant de coeur et du composant de gaine, et la composition de résine cristalline contient 15 à 35 % en masse d'un polymère oléfinique faiblement cristallin satisfaisant l'expression (a) suivante :

$$\text{(a)}\quad \Delta H \geq 6 \times (Tm - 140\ °C)$$

dans laquelle ΔH représente un endotherme de fusion, et Tm représente un point de fusion,
dans laquelle le polymère oléfinique faiblement cristallin est un polymère de polypropylène et dans lequel le polymère oléfinique faiblement cristallin satisfait les conditions (b) et (c) suivantes :

(b) le point de fusion (Tm) est de 0 °C ou plus et inférieur à 120 °C,
(c) l'endotherme de fusion (ΔH) est de 1 à 100 J/g.

**3.** Etoffe non tissée selon la revendication 2, dans laquelle la proportion de gaine est de 1 à 49 % en masse par rapport à la quantité totale du composant de coeur et du composant de gaine.

**4.** Etoffe non tissée selon la revendication 2 ou 3, dans laquelle, dans l'étoffe non tissée ayant trois couches ou plus, le rapport de la couche la plus extérieure formée par utilisation de la composition de résine cristalline à toutes les couches est de 1 à 99 % sur la base du poids surfacique.

**5.** Etoffe non tissée selon l'une quelconque des revendications 1 à 4, dans laquelle le polymère oléfinique faiblement cristallin est un polymère de polypropylène faiblement cristallin satisfaisant les expressions (d) à (i) suivantes :

$$\text{(d)}\quad [mmmm] = 20 \text{ à } 60\ \% \text{ en moles}$$

$$\text{(e)}\quad [rrrr]/(1-[mmmm]) \leq 0{,}1$$

$$\text{(f)}\quad [rmrm] > 2{,}5\ \% \text{ en moles}$$

$$\text{(g)}\quad [mm]\times[rr]/[mr]^2 \leq 2{,}0$$

$$\text{(h)}\quad \text{masse moléculaire moyenne en masse (Mw)} = 10\ 000 \text{ à } 200\ 000,$$

et

(i) distribution des masses moléculaires (Mw/Mn) < 4,

où [mmmm] représente la fraction de pentades méso, [rrrr] représente la fraction de pentades racémiques, [rmrm] représente la fraction de pentades racémique-méso-racémique-méso, [mm] représente la fraction de triades méso, [rr] représente la fraction de triades racémiques, et [mr] représente la fraction de triades méso-racémique.

**6.** Etoffe non tissée selon l'une quelconque des revendications 3 à 5, dans laquelle la proportion du composant de gaine est de 25 à 49 % en masse par rapport à la quantité totale du composant de coeur et du composant de gaine.

**7.** Etoffe non tissée selon l'une quelconque des revendications 1 à 6, dans laquelle l'indice d'écoulement à l'état fondu (MFR) du polymère oléfinique faiblement cristallin est de 40 à 80 g/10 minutes.

**8.** Etoffe non tissée selon la revendication 5, dans laquelle la masse moléculaire moyenne en poids (Mw) est de 100 000 à 140 000.

**9.** Etoffe non tissée selon l'une quelconque des revendications 1 à 8, dans laquelle la composition de résine cristalline comprend un polypropylène hautement cristallin, et dans laquelle l'indice d'écoulement à l'état fondu (MFR) du polypropylène hautement cristallin est de 1 à 100 g/10 minutes.

**10.** Produit textile formé par utilisation de l'étoffe non tissée selon l'une quelconque des revendications 1 à 9.

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- EP 2479331 A1
- US 20100190405 A1
- EP 1260525 A1
- JP 2003027331 A
- JP 2000344833 A
- JP 2001191463 A
- JP 2009062667 A
- JP 2006103147 A


### Non-patent literature cited in the description


- **A. ZAMBELLI et al.** *Macromolecules,* 1975, vol. 8, 687
- **A. ZAMBELLI et al.** *Macromolecules,* 1973, vol. 6, 925